# EUROPÄISCHE PATENTSCHRIFT

(11) **EP 2 523 912 B1**
(45) Veröffentlichungstag und Bekanntmachung des Hinweises auf die Patenterteilung: **15.01.2020**
(21) Anmeldenummer: 11702588.2
(22) Anmeldetag: 06.01.2011
(51) Int. Cl.: C03B 19/08, C03C 11/00

(54) **BLÄHGLASGRANULAT UND DESSEN VERWENDUNG**
EXPANDED GLASS GRANULES AND THE USE THEREOF
GRANULAT DE VERRE EXPANSÉ ET SON UTILISATION

(30) Priorität: 12.01.2010 DE 102010000049
(43) Veröffentlichungstag der Anmeldung: 21.11.2012
(73) Patentinhaber: Liaver GmbH & Co. KG, 98693 Ilmenau (DE)
(72) Erfinder: TSCHIERSCH, Ronald, 98714 Stützerbach (DE); STIEBERT, Monika, 98693 Ilmenau (DE); KUHNE, Angelika, 98693 Ilmenau (DE); DRIESNER, Jürgen, 99330 Gräfenroda (DE)
(74) Vertreter: Engel, Christoph Klaus
(86) Internationale Anmeldenummer: PCT/EP2011/050118
(87) Internationale Veröffentlichungsnummer: WO 2011/086024

(56) Entgegenhaltungen:
- EP-A2- 0 661 240
- WO-A1-2005/087676
- CH-A- 539 004
- DE-A1- 4 344 994
- DE-A1- 10 334 997
- FR-A- 1 421 454
- JP-A- 58 060 634
- JP-A- 2006 256 895
- US-A- 4 086 098
- US-A1- 2002 004 111

## Beschreibung

Die vorliegende Erfindung betrifft ein Verfahren zur Herstellung eines Blähglasgranulates, welches u. a. als Zuschlagstoff oder Füller einsetzbar ist. Im Weiteren betrifft die Erfindung das Blähglasgranulat als solches und eine Verwendung des Blähglasgranulates.

Die EP 0 661 240 B1 zeigt ein Schaumglasgranulat und ein Verfahren zu seiner Herstellung. Als Ausgangsstoffe dienen ein gemahlenes Glas, ein Bindemittel und ein Blähmittel. Aus den Ausgangsstoffen wird ein Rohgranulat gewonnen, welches durch ein Wärmebehandlungsverfahren geschäumt wird. Das gewonnene Schaumglasgranulat wird auch als Blähglasgranulat bezeichnet.

Aus der DE 100 33 999 A1 ist ein Verfahren zur Herstellung eines im Wesentlichen offenporigen Granulates bekannt, bei welchem anorganische amorphe Fasern granuliert und gesintert werden.

Die US 3,870,496 zeigt ein Verfahren zur Herstellung eines Schaumglases, bei welchem die Erweichungstemperatur des zu verarbeitenden Glases durch einen eine Hydroxidgruppe umfassenden Stoff, wie Wasser, Methanol oder Ammoniak gesenkt ist. Die Hydroxidgruppen sollen die Kristallstruktur des Glases verändern, um beispielsweise die Struktur [Si--ONa, NaO--Si] auszubilden.

Die WO 2005/087676 A1 lehrt ein Verfahren zur Herstellung von Schaumglasgranulat, bei welchem Wasser, vorgemahlenes Glas, Wasserglas und Blähmittel als Rohansatz verwendet werden. Der Rohansatz wird über mehrere Stunden nass gemahlen und anschließend durch Erwärmen verschäumt. Das Wasserglas dient als Bindemittel und als Flussmittel. Das Wasserglas wird feucht bereitgestellt.

Die DE 43 44 994 A1 zeigt ein Verfahren zur Herstellung von Blähglasgranulaten, bei welchem Abfallglas, Wasserglas, Bindemittel, organische Treibmittel und Wasser als Ausgangsstoffe verwendet werden. Das Wasserglas wird in Form einer Lösung verwendet, beispielsweise Na₂O · 3 SiO₂, 40%-ig.

Die DE 197 34 791 B4 zeigt ein Verfahren zur Herstellung eines offenporigen Blähglasgranulates, bei welchem unter anderem Glas und Altglas gemahlen, granuliert und gebläht werden. Bevorzugt wird die Blähwirkung organisch belasteter Abfallstoffe ausgenutzt, sodass kein weiteres Blähmittel erforderlich ist. Das offenporige Blähglasgranulat weist den Nachteil auf, dass es eine hohe Menge Wasser aufnimmt, wodurch es für viele Anwendungen nicht geeignet ist.

Aus der DE 103 34 997 A1 sind eine Blähglaszusammensetzung und ein Verfahren zu deren Herstellung bekannt. Blähglaskörner der Blähglaszusammensetzung werden mit einem Überzug aus einem Bindemittel beschichtet, sodass nur wenig Wasser in die Blähglaskörner eindringen kann. Ein Nachteil dieser Lösung besteht in dem zusätzlichen Aufwand, der zur Beschichtung der Blähglaskörner erforderlich ist. Die Wasseraufnahme ist in zwei verschiedenen Einheiten angegeben. Eine erste Einheit gibt die Masse an Wasser an, welche nach sieben Tagen aufgenommen ist. Eine zweite Einheit gibt die Masse an Wasser an, welche nach dreißig Tagen aufgenommen ist. Diese Angaben lassen unberücksichtigt, mit welchem Druck das Wasser auf das Blähglasgranulat eingewirkt hat. Es ist nicht angegeben, dass dieser Druck erhöht eingestellt wurde. Jedenfalls ist die Wasseraufnahme bei erhöhtem Druck wesentlich höher.

Die EP 0 010 069 B2 zeigt ein Verfahren zur Herstellung eines durch Ofenblähung erzeugten Schaumglasgranulates, bei dem es sich bei genauer Betrachtung aber um einen Schaumglasschotter handelt. Eine Paste umfassend Wasser, Wasserglas, Glycerin und Natriumbentonit wird als Binde-, Fluss- und Blähmittel verwendet. Dabei fungiert das Glycerin als Blähmittel.

Aus der DE 198 37 327 A1 ist ein Fließbeton bekannt, welcher als Zuschlagstoff bevorzugt Blähglas aufweist, welches eine Rohdichte von etwa 1,1 besitzt und aus einem nicht saugenden Material besteht. Die Herstellung dieses Blähglases ist nicht beschrieben.

Die WO 98/19976 A1 zeigt einen Zementmörtel mit einem Leichtzuschlagstoff, welcher bevorzugt durch kugelförmige Glaspartikel gebildet ist.

Die DE 101 46 806 B4 zeigt ein Granulatkorn, welches vorzugsweise als Immobilisierungsträger in der Biotechnologie zu verwenden ist. Das Granulatkorn besteht aus einem leichten wasserdichten geschlossenporigen Kern und einer Hülle aus abriebfestem Material aus Keramik oder einem Glas-Keramik-Sinterwerkstoff. Die effektive Dichte des gesamten Korns liegt bevorzugt zwischen 1,05 g/cm³ und 1,5 g/cm³. Dieses für spezielle Anwendungen vorgesehene Granulatkorn ist aufwändig herzustellen.

Aus der US 4,086,098 ist die Herstellung von Glaskugeln aus gemahlenem Kalk-Natron-Glas und gemahlenem Kalkstein bekannt. Das Ausgangsgemisch wird in einen Ofen mit einer Temperatur zwischen 600 bis 650°C eingebracht, um die äußeren Oberflächen der Kugeln zu sintern. Anschließend werden die Kugeln in einen Drehrohrofen mit einer Temperatur von 800°C eingespeist. Der Kalkstein zersetzt sich unter Bildung von CO₂, wodurch es zur Zellbildung kommt. Die Glaskugeln weisen eine Dichte von z.B. zwischen 0,12 und 0,18g/cm³ und eine Wasseraufnahme von z.B. weniger als 7Volumen% in 24h auf. Dabei ist die Wasseraufnahme der Glaskugeln mit den größeren Dichtewerten des angegebenen Bereiches kleiner, nämlich bis zu 3 Volumen% minimal.

Die JP 2006 256 895 A beschreibt Glas-Mikrohohlkugeln und ein Verfahren zu deren Herstellung. Die Glas-Mikrohohlkugeln haben eine Korngröße D90 ≤ 30 µm und eine Partikeldichte im Bereich 0,8-1,2 g/cm³. Die Glas-Mikrohohlkugeln sind als sehr kleine, geschlossene, innen hohl ausgebildete Kugeln gebildet.

Die US 2002/0004111 A1 beschreibt ebenfalls Glas-Mikrohohlkugeln mit einer maximalen Partikelgröße von 30 µm und einer Partikeldichte im Bereich 0,1-1,5 g/cm³.

Die Aufgabe der vorliegenden Erfindung besteht ausgehend vom Stand der Technik darin, ein besonders festes Blähglasgranulat bereitzustellen, welches eine sehr geringe Wasseraufnahme unter hohen Drücken, aufweist und aufwandsarm herstellbar ist. Die Kornrohdichte soll einstellbar sein, vorzugsweise auf etwa 1 g/cm³. Ferner sind besonders vorteilhafte Verwendungen des Blähglasgranulates aufzuzeigen.

Die genannte Aufgabe wird durch ein Blähglasgranulat gemäß dem beigefügten Anspruch 1 gelöst. Erfindungsgemäß wird weiterhin eine Verwendung des Blähglasgranulates gemäß dem beigefügten nebengeordneten Anspruch 3 aufgezeigt.

Nachfolgend wird ein Verfahren zur Herstellung eines Blähglasgranulates, wie es beispielsweise als Zuschlagstoff oder Füllstoff verwendet werden kann, beschrieben. Zunächst sind Ausgangsstoffe bereitzustellen, welche 80% bis 95% Glas und 5% bis 20% eines Wasserglashydrates umfassen.

Die angeführten Prozentangaben, wie auch alle nachfolgenden Prozentangaben beziehen sich auf den Masseanteil, insofern nichts anderes angegeben ist. Bei dem Wasserglashydrat handelt es sich um ein zunächst vorzugsweise in wässriger Emulsion vorliegendes Wasserglas, in welchem Kristallwasser im Gitter eingebaut ist bzw. in einem nachfolgenden Kompaktierungsprozess in die aktivierte Glasoberfläche eingebaut wird. Der Kristallwasseranteil beträgt etwa 1 bis 2%. Die bereitgestellten Ausgangsstoffe, insbesondere das Glas ist zu vermahlen und mit dem Wasserglashydrat zu vermischen. Das Vermischen kann beispielsweise dadurch erfolgen, dass das Wasserglashydrat in wässriger Lösung auf das vermahlte Glas verteilt wird. Die Ausgangsstoffe können gemeinsam oder einzeln vermahlen werden, insofern sie nicht bereits feinkörnig vorliegen. Die vermahlenen Ausgangsstoffe weisen eine Korngröße von beispielsweise weniger als 100 µm auf. In einem weiteren Schritt des Verfahrens sind die vermahlten Ausgangsstoffe zu granulieren, wodurch ein Rohgranulat entsteht. In den einzelnen Granulatkörnern des Rohgranulats ist jeweils eine Vielzahl der Teilchen der vermahlten Ausgangsstoffe gebunden. In einem weiteren Schritt ist das Rohgranulat mit einem Trennmittel zu vermischen. Dabei ist der Anteil des Trennmittels so zu wählen, dass er zwischen 10% und 40% der das Rohgranulat umfassenden Mischung aufweist. Das Trennmittel gewährleistet, dass die Granulatkörner des Rohgranulates in den weiteren Bearbeitungsschritten zueinander lose bleiben. Die das Rohgranulat und das Trennmittel umfassende Mischung ist auf eine Verarbeitungstemperatur zu erwärmen. Die Verarbeitungstemperatur ist mindestens so hoch wie die unterste durch das Wasserglashydrat verminderte Sintertemperatur des Glases zu wählen. Auch ist die Verarbeitungstemperatur kleiner als die Schmelztemperatur des Glases zu wählen. Die Sintertemperatur eines Glases ist in vielen Fällen durch ein Temperaturintervall anzugeben, welches von einer untersten bis zu einer höchsten Sintertemperatur reicht. Bevorzugt ist die Verarbeitungstemperatur in einem Temperaturintervall zwischen der untersten Sintertemperatur und einer 50 K höheren Temperatur zu wählen.

Das Erwärmen der das Rohgranulat und das Trennmittel umfassenden Mischung führt in einem ersten Teilschritt dazu, dass Poren an Oberflächen der Körner des Rohgranulates durch das thermische Aufweichen des Glases verschlossen werden. Folglich sind danach die Poren an den Oberflächen der Körner weitgehend verschlossen, sodass sich in den Granulatkörnern des Rohgranulates ein Überdruck aufbauen kann. Das Erwärmen der das Rohgranulat und das Trennmittel umfassenden Mischung führt in einem zweiten Teilschritt dazu, dass das Kristallwasser aus dem Wasserglashydrat gelöst wird und zur thermischen Ausdehnung, insbesondere zur Verdampfung gebracht wird, wodurch die Granulatkörner des Rohgranulates aufblähen und das Blähglasgranulat ausbilden.

Das erhaltene Blähglasgranulat ist abzukühlen, bevorzugt unter Einsatz eines Kühlmediums. Das Trennmittel ist bevorzugt vom Blähglasgranulat zu trennen, beispielsweise durch einen Siebvorgang.

Ein besonderer Vorteil des Verfahrens besteht darin, dass es eine aufwandsarme Herstellung eines kaum Wasser aufnehmenden Blähglasgranulates erlaubt, ohne dass hierfür weitere Ausgangsstoffe oder aufwändige Verfahrensschritte erforderlich sind.

Das im Wasserglashydrat gebundene Kristallwasser entfaltet eine ausreichende Blähwirkung, sodass bevorzugt kein weiteres Blähmittel als Ausgangsstoff bereitgestellt und verwendet wird.

Bevorzugt sind neben dem Glas und dem Wasserglashydrat keine weiteren Ausgangsstoffe bereitzustellen und zu verwenden. Das Wasserglashydrat wird bevorzugt als Natronwasserglashydrat bereitgestellt.

Bei einer bevorzugten Ausführungsform des Verfahrens wird das Glas mit einem Anteil zwischen 87% und 93% bereitgestellt, während das Wasserglashydrat mit einem Anteil zwischen 7% und 13% bereitgestellt wird.

Das als Ausgangsstoff verwendete Glas umfasst bevorzugt Scherben aus Altglas und/oder vermahltes Blähglasgranulat. Die Scherben können beispielsweise gebrochenes Behälterglas oder gebrochenes Flachglas sein.

Das Glas besteht bevorzugt zwischen 10% und 50% aus dem vermahlten Blähglasgranulat.

Als Trennmittel ist bevorzugt Tonmehl oder Kaolin zu verwenden.

Das Vermahlen der Ausgangsstoffe erfolgt bevorzugt bis zu einer Feinheit, bei welcher mehr als 90% der vermahlten Teilchen weniger als 32 µm groß sind.

Bei einer weiteren bevorzugten Ausführungsform des Verfahrens erfolgt das Granulieren der vermahlten Ausgangsstoffe zu dem Rohgranulat dadurch, dass zunächst Schülpen aus den vermahlten Ausgangsstoffen gepresst werden, die daraufhin zu Körnern des Rohgranulates fraktioniert werden. Die Schülpen werden bevorzugt dadurch gewonnen, dass die vermahlten Ausgangsstoffe mit einem hohen Druck von mehr als 100 MPa gepresst werden.

Die Teilchen des Rohgranulates, d. h. die Rohgranulatkörner sind bevorzugt zwischen 0,1 mm und 0,5 mm groß. Das Rohgranulat wird bevorzugt vor dem Vermischen mit dem Trennmittel getrocknet, damit es mit dem Trennmittel vermischt werden kann.

Die Verarbeitungstemperatur beträgt bevorzugt zwischen 700°C und 850°C. Diese Temperatur ist besonders für Rohgranulat geeignet, welches aus Scherben aus Altglas und vermahlten Blähglasgranulat besteht.

Das Rohgranulat wird bevorzugt für mindestens 30 min erwärmt.

Bei einer bevorzugten Ausführungsform des Verfahrens erfolgt das Erwärmen des Rohgranulates in einem indirekt beheizten Ofen, sodass die zuzuführende Wärme ausschließlich über die Ofenwandung im Inneren des Ofens auf das zu blähende Rohgranulat übertragen wird.

Das Rohgranulat wird bevorzugt auf einem Förderweg durch den Ofen befördert. Dabei beträgt die Temperatur in einem ersten, weniger als die Hälfte des Förderweges umfassenden Abschnitt, die genannte Verarbeitungstemperatur. In einem zweiten, den übrigen Förderweg umfassenden Abschnitt, ist die Temperatur gegenüber der Verarbeitungstemperatur um einen Wert zwischen 10 K und 30 K verringert. Der größte Teil des Wärmestroms wird auf diese Weise im vorderen Abschnitt des Förderwegs in das Granulat eingebracht.

Das Blähglasgranulat bleibt bevorzugt solange erwärmt, bis es eine Kornrohdichte zwischen 0,9 g/cm³ und 1,1 g/cm³ aufweist.

Das erfindungsgemäße Blähglasgranulat weist lose Blähglaskörner auf, die in der Mehrzahl aus Glas bestehen, geblähte Hohlräume besitzen und eine dicht gesinterte Oberfläche aus Glas aufweisen. Im Herstellungsprozess (siehe oben) setzt in einem früheren Stadium unter Einwirkung des Wasserglases die Versinterung ein, welcher sich ein sehr beschränkter Blähprozess anschließt, dessen Blähwirkung auf das im Wasserglas eingelagerte Kristallwasser zurückzuführen ist. Die Oberfläche des Granulats wird dadurch dicht gesintert, d.h. die Oberfläche bleibt weitgehend geschlossen, im Vergleich mit herkömmlichem Blähglas. Ein weiteres stärkeres Blähen findet im Unterschied zu herkömmlichem Blähglas nicht statt, da ein "herkömmliches" Blähmittel nicht verwendet wird.

Das erfindungsgemäße Blähglasgranulat weist den Vorteil auf, dass es aufwandsarm herstellbar ist und auch für Anwendungen geeignet ist, in welchen das Blähglasgranulat Wasser bzw. wässrigen Lösungen oder Mischungen mit hohem Druck ausgesetzt ist, da das Blähglasgranulat kein bzw. nahezu kein Wasser aufnimmt und eine so hohe Festigkeit aufweist, dass die Blähglaskörner auch bei hohem hydrostatischen Druck nicht zerstört werden.

Das erfindungsgemäße Blähglasgranulat ist derart ausgeführt, dass seine Wasseraufnahme weniger als 10 Masse% beträgt, nämlich wenn es nach herkömmlichen Messverfahren (DIN V 18004:2004) Wasser ausgesetzt wird. Bei der Einwirkung von Wasser erhöht sich die wirksame Kornrohdichte somit um weniger als 10% gegenüber der Kornrohdichte (DIN V 18004). Blähglasgranulat nach dem Stand der Technik zeigt unter solchen Bedingungen eine Wasseraufnahme von 20%-35%.

Wird das erfindungsgemäße Blähglasgranulat über eine Zeitdauer von 1 Stunde Wasser mit einem Druck von ca. 7 MPa (1000 psi) ausgesetzt, liegt die Wasseraufnahme kleiner 10 Masse%.

Das erfindungsgemäße Blähglasgranulat weist eine Kornrohdichte zwischen 0,9 g/cm³ und 1,1 g/cm³ auf, sodass es für Anwendungen geeignet ist, bei welchen das Blähglasgranulat mit Wasser oder ähnlich dichten Stoffen vermischt wird.

Aufgrund der übereinstimmenden Dichte wird eine Entmischung vermieden und das Blähglasgranulat bleibt innerhalb von Prozessen auch unter hohen Drücken über längere Zeit gleichmäßig verteilt in wässrigen Lösungen.

Das erfindungsgemäße Blähglasgranulat weist eine hohe Druckfestigkeit von mehr als 5 N/mm² auf (gemessen nach EN 13055-1).

Das erfindungsgemäße Blähglasgranulat ist durch das beschriebene Verfahren herstellbar.

Die Erfindung offenbart weiterhin eine Verwendung des erfindungsgemäßen Blähglasgranulats als Zuschlagstoff in einem Mörtel, welcher insbesondere mit einem hydrostatischen Druck von bis zu 7 MPa verarbeitet werden kann. Bei einem solchen Mörtel handelt es sich beispielsweise um eine Slurry, wie sie für die Verfüllung von Erdbohrlöchern benötigt wird. Das erfindungsgemäße Blähglasgranulat ist für diese Verwendung geeignet, da es eine sehr geringe Wasseraufnahme auch bei hohen Drücken aufweist und andererseits mit einer Dichte von etwa 1 g/cm³ ausführbar ist, sodass es in der Slurry homogen verteilt werden kann. Das erfindungsgemäße Blähglasgranulat eignet sich aufgrund seiner besonderen Eigenschaften aber auch als Füllstoff in Suspensionen oder Spülflüssigkeiten, wie sie beispielsweise für das Spülen von Erdbohrlöchern benötigt werden. In diesem Fall wirkt das Granulat wie ein Schmirgel, um Anhaftungen und Ablagerungen zu lockern und mit der Spülflüssigkeit auszuspülen.

Das beschriebene Verfahren wird nachfolgend an zwei Beispielen im Detail erläutert.

Bei einem ersten Beispiel werden 90% aufbereitete Scherben aus Glas und 10% Natronwasserglas mit 37 bis 40 Be als Ausgangsstoffe bereitgestellt. Das Glas umfasst 30% bis 70% Behälterglas und 30% bis 70% Flachglas. Beispielsweise können 90 kg der Scherben aus Glas und 10 kg des Natronwasserglases als Ausgangsstoffe verwendet werden. Die Scherben aus Glas werden in einer Kugelmühle bis zu einer Feinheit vermahlen, bei welcher mehr als 80% der vermahlten Glasteilchen eine Größe von weniger als 32 µm aufweisen. Die vermahlten Glasteilchen werden in einem Intensivmischer mit dem Natronwasserglas vermischt, indem das Natronwasserglas als wässrige Lösung durch ein Verdüsen in einer äußerst feinen Verteilung in die vermahlten Glasteilchen eingebracht wird. Die vermischten Ausgangsstoffe werden in einem Kompaktor zu Schülpen verpresst, wobei der Pressdruck im Kompaktor zwischen 100 MPa und 200 MPa beträgt. Dabei fungiert das Natronwasserglas als Bindemittel. Die Natriumsilikat-Ionen führen einerseits zu einer Veränderung der chemischen Zusammensetzung des granulierten Glases und dadurch zu einer Senkung der Erweichungstemperatur, insbesondere zu einer Senkung der Sintertemperatur des Glases. Der hohe Pressdruck zwischen 100 MPa und 200 MPa bewirkt eine fortgesetzte Verteilung des Natronwasserglases in dem vermahlten Glas und einen sehr engen Kontakt der Glasteilchen, wodurch gute Voraussetzungen für eine Versinterung geschaffen sind.

Die Schülpen werden dann zu Rohgranulat zerkleinert, welches nachfolgend eine Trocknung erfährt. Das Rohgranulat wird mit einem geeigneten Tonmehl als Trennmittel im Verhältnis 4:1 vermischt und in einem indirekt beheizten Drehrohrofen auf eine Temperatur zwischen 700°C und 850°C erwärmt, wo es über eine Zeitdauer von 30 min gesintert und gebläht wird. Das Kristallwasser in der Natronwasserglaslösung wirkt viskositätsenkend und schmelzbeschleunigend, sodass es frühzeitig zur Erzeugung einer dicht gesinterten Oberfläche auf den Körnern des zu blähenden Granulats kommt.

Die Temperatur im Drehrohrofen ist derart eingestellt, dass es zu einem Temperaturmaximum bereits im ersten Drittel (bezogen auf die gesamte Förderstrecke) des Ofens kommt. Der in den Körnern des Granulats noch verbliebene Anteil Kristallwasser wird zunehmend freigesetzt und verdampft, sodass es im Inneren der Körner des Granulats zu einem erhöhten Druck kommt und ein schaumiges Gefüge erzeugt wird. Die Blähung der Körner des Granulats erfolgt dabei nur in einem geringen Maße. Eine dicht gesinterte, rissfreie Oberfläche der Körner des Granulats wird dadurch gewährleistet, dass das Erwärmen moderat erfolgt und dabei der schmelzbeschleunigenden Wirkung des Kristallwassers vom Wasserglas gegenüber seiner Wirkung als Blähmittel der Vorrang gegeben wird.

Nachdem das Granulat in dem gewünschten Maße gebläht ist, erfolgt eine definierte Abkühlung des hergestellten Blähglasgranulates. In einem weiteren Schritt erfolgt eine Trennung des Blähglasgranulates von dem Trennmittel. Das gemäß diesem Ausführungsbeispiel hergestellte Blähglasgranulat weist eine Korngröße zwischen 0,1 mm und 1,4 mm auf. Die Schüttdichte beträgt 530 g/l ± 10%. Die Kornrohdichte beträgt 1,0 g/cm³ ± 5%. Die Kornfestigkeit weist einen Wert von 7 N/mm² ± 10% auf.

Gemäß einem zweiten Beispiel werden 80% aufbereitete Scherben, 10% aufgemahlenes Blähglasgranulat und 10% Natronwasserglas mit 37 bis 40 Be als Ausgangsstoffe verwendet. Die aufbereiteten Scherben bestehen zu 30% bis 70% aus Behälterglas und 70% bis 30% Flachglas. Beispielweise können 80 kg aufbereitete Scherben, 10 kg aufgemahlenes Blähglasgranulat und 10 kg Natronwasserglas verwendet werden. Die Ausgangsstoffe werden in gleicher Weise wie bei dem ersten Beispiel verarbeitet. Das auf dieser Weise hergestellte Blähglasgranulat weist eine Korngröße zwischen 0,1 mm und 1,4 mm auf. Die Schüttdichte beträgt 557 g/l. Die Kornrohdichte weist einen Wert von 1,02 g/cm³ ± 5% auf. Die Kornfestigkeit beträgt 5,1 N/mm² ± 10%.

## Patentansprüche

1. Blähglasgranulat mit losen Blähglaskörnern, die in der Mehrzahl aus Glas bestehen, geblähte Hohlräume besitzen, eine dicht gesinterte Oberfläche aus Glas aufweisen, wobei das Blähglasgranulat eine Kornrohdichte zwischen 0,9 g/cm³ und 1,1 g/cm³ sowie eine Kornfestigkeit von mehr als 5 N/mm² aufweist und eine Wasseraufnahme von weniger als 10 Masse% zeigt, wenn es über eine Zeitdauer von 1 Stunde Wasser mit einem Druck von ca. 7 MPa ausgesetzt ist.

2. Blähglasgranulat nach Anspruch 1, **dadurch gekennzeichnet, dass** es eine Korngröße zwischen 0,1 mm und 1,4 mm aufweist.

3. Verwendung eines Blähglasgranulates nach Anspruch 1 oder 2 als Zuschlagstoff in Mörtel oder als Füllstoff in Spülflüssigkeiten.

4. Verwendung nach Anspruch 3, **dadurch gekennzeichnet, dass** es sich bei dem Mörtel um eine Slurry zur Verfüllung von Bohrlöchern handelt.

## Claims

1. Foam-glass-granulate comprising loose expanded glass particles, the majority of which consists of glass, have expanded cavities, comprise a densely sintered surface made of glass, wherein the foam-glass-granulate has a raw-grain density between 0.9 g/cm³ and 1.1 g/cm³, as well as a grain strength of more than 5 N/mm², and it shows a water absorption of less than 10 wt.%, if it is exposed to water over a time period of 1 hour at a pressure of about 7 MPa.

2. Foam-glass-granulate according to claim 1, **characterized in that** its particles are between 0.1 mm and 1.4 mm in size.

3. Use of a foam-glass-granulate according to claim 1 or 2 as an additive in mortar or as a filler in rinsing liquids.

4. Use according to claim 3, **characterized in that** the mortar is a slurry for backfilling of boreholes.

## Revendications

1. Verre expansé sous forme granulaire, comportant des granulés de verre expansé en vrac qui sont pour la majorité d'entre eux constitués de verre, qui possèdent des cavités créées par expansion et qui présentent une surface en verre densifiée par frittage, ledit verre expansé sous forme granulaire ayant une densité brute des granulés comprise entre 0,9 g/cm³ et 1,1 g/cm³ ainsi qu'une résistance mécanique des granulés supérieure à 5 N/mm² ainsi qu'une absorption d'eau inférieure à 10 % en masse lorsqu'il est exposé à l'eau sous une pression d'environ 7 MPa pendant une durée égale à 1 heure.

2. Verre expansé sous forme granulaire selon la revendication 1, **caractérisé en ce qu'**il présente une granulométrie comprise entre 0,1 mm et 1,4 mm.

3. Utilisation d'un verre expansé sous forme granulaire selon les revendications 1 ou 2 en tant que granulat dans du mortier ou en tant que charge dans des fluides de forage.

4. Utilisation selon la revendication 3, **caractérisée en ce que** ledit mortier est une suspension destinée à remplir des trous de forage.
